**Europäisches Patentamt**

**European Patent Office**

**Office européen des brevets**

(19)

(11) **EP 1 326 450 A1**

(12) **EUROPEAN PATENT APPLICATION**

(43) Date of publication:
**09.07.2003 Bulletin 2003/28**

(51) Int Cl.7: **H04N 7/30**

(21) Application number: **01130689.1**

(22) Date of filing: **21.12.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Sony International (Europe) GmbH
10785 Berlin (DE)**

(72) Inventors:
• **Golov, Gil, Advanced Techn. Center Stuttgart
70327 Stuttgart (DE)**
• **Dilly, Altfried, Advanced Techn. Center Stuttgart
70327 Stuttgart (DE)**

(74) Representative: **Müller - Hoffmann & Partner
Patentanwälte,
Innere Wiener Strasse 17
81667 München (DE)**

(54) **Method and apparatus for detecting block-structured artifacts**

(57)     Due to the MPEG-decoding process, especially in a case of high activity and low bit rate video streams, an eight by eight pixel block artifact pattern appears. In order to reduce such artifacts, a BNR (Block Noise Reducer) filter is used which needs positions of the artifact blocks. The invention provides an Automatic MPEG Block Structure Phase Detector generating in real time reliable information on the existence and positions of the artifact blocks.

Fig. 2

**Description**

The invention relates to a method for detecting block-structured artifacts and an apparatus used for performing said method.

In recent years, devices dealing with digital image data like digital cameras or digital video systems have become common. Since the resolution of said digital cameras and digital video systems has reached a high level, huge amounts of digital image data have to be handled. In order to cope with this situation, image data compressing algorithms/devices are needed.

Among the different available image data compressing algorithms, the so called MPEG-compression algorithm is a very common and frequently used standard. However, when decompressing a sequence of MPEG-compressed images (in the following also referred to as video frames), an 8 by 8 pixel block artifact pattern appears, especially in the case of high motion within the images and/or low bit rate image streams. In order to reduce or eliminate such artifacts, it is common to use a BNR (block noise reducer)-filter. However, the use of such a filter requires respective positions of the artifact blocks as input parameters.

It is an object of the present invention to provide a method and an apparatus for detecting block-structured artifacts within one-dimensional or two-dimensional video frames obtained when decoding MPEG-compressed digital image data.

In order to solve this object, the present invention provides a method for detecting block-structured artifacts according to claim 1. Further, the present invention provides an apparatus for detecting block-structured artifacts according to claim 10. Last, a computer program product according to claim 20 is provided. Further features and embodiments are respectively defined in respective subclaims.

According to the present invention, a method for detecting block-structured artifacts within a video frame comprises the following steps:

a) calculating for each pixel line within the video frame pv vertical luminance levels $P_{i,l}$ according to following equation:

$$(1) \qquad P_{i,l} = \sum_{s=0}^{(\text{line\_length}/pv) - 1} Y(pv \cdot s + i) \qquad ,$$

wherein

pv is an artifact pixel periodicy value, i is an index running from 0 to (pv-1), 1 is a pixel line index running from 0 to (number_of_lines-1), wherein number_of_lines is the total number of pixel lines, Y(x) is the luminance value of a pixel at a position x within a pixel line, and line_length is the total number of pixels of a single pixel line, calculating pv sums of the vertical luminance levels $PTV_i$ according to the following equation:

$$(2) \qquad PTV_i = \sum_{l=0}^{\text{number\_of\_lines} - 1} P_{i,l} \qquad ,$$

and/or

b) calculating for each pixel column within the video frame ph horizontal luminance levels $P_{i,c}$ according to following equation:

$$(3) \qquad P_{i,c} = \sum_{s=0}^{(\text{column\_length}/ph) - 1} Y(ph \cdot s + i) \qquad ,$$

wherein

ph is an artifact pixel periodicy value, i is an index running from 0 to (ph-1), c is a pixel column index running from 0 to (number_of_columns-1), wherein number_of_columns is the total number of pixel columns, Y(x) is the luminance value of a pixel at a position x within a pixel column, and column_length is the total number of pixels of a single pixel column,

calculating ph sums of the horizontal luminance levels $PTH_i$ according to the following equation:

$$(4) \qquad PTH_i = \sum_{c=0}^{number\_of\_columns\ -\ 1} P_{i,c} \qquad ,$$

and

c) determining a highest value of the $PTV_i$ values and/or a highest value of said $PTH_i$ values, and determining vertical and/or horizontal positions of said artifacts within said video frame on the basis of said highest $PTV_i$ value and/or said highest $PTH_i$ value.

Step a) is needed if the vertical positions of said artifacts have to be determined, whereas step b) is needed if the horizontal positions of said artifacts have to be determined, step c) is always needed.

The method described above in particular provides an "Automatic MPEG Block Structure Phase Detector" generating in real time reliable information on the existence and the position of block artifacts occurring during an MPEG decoding process.

As already indicated above, specific $PTV_i$/$PTH_i$ values (here the highest values of these) serve as a basis for deciding if artifacts are present within the video frame. As already indicated, the term "video frame" means in particular digital image data (the video signal).

In a preferred embodiment, in addition to the highest $PTV_i$/$PTH_i$ values, a second highest value of the $PTV_i$ values/a second highest value of the $PTH_i$ values are determined. Then, the highest $PTV_i$/$PTH_i$ values and the second highest $PTV_i$/$PTH_i$ values are compared with each other, respectively. If it is found that a difference between the highest $PTV_i$/$PTH_i$ values and the second highest $PTV_i$/$PTH_i$ values exceeds a certain threshold value, respectively, it is determined that the highest $PTV_i$/$PTH_i$ values correspond to respective vertical/horizontal positions of artifacts, i.e. it is decided that artifacts are present. If, however, said threshold value is not exceeded, it is determined that no artifacts are present within the video frame. This step ensures that only significant differences in luminance values are considered to be artifacts, whereas only slight differences are not considered. Therefore, the above-described comparing process acts like a filter mechanism.

The threshold value may be dynamically set in depedence of previous generated/stored artifact information. Artifact information means all kind of information correlated to artifacts, for example video frame, motion data related to said video frames, artifact positions, and the like. Thus, the sensivity of the above-described filter mechanism can be adapted to changing demands. For example, the threshold value may be increased if no artifacts have been detected in previous processed video frames, and may be decreased if artifacts have been detected in previous processed video frames. A detection of artifacts itself can be regarded as a generation of artifact information which may be stored and used for processing succeeding video frames. In this context, it has to be menioned that the inventive method preferably is applicated to a stream of video frames, i. e. to a sequence of video frames. However, also one single ("isolated") video frame may be subjected to artifact detecting. Further, concrete artifact positions may also be stored as artifact information for further use. If, for example, in different video frames an artifact has been detected for a long period of time at the same position, respectively, it is likely that in succeeding video frames artifacts will appear at that position, too. Therefore, all detected artifact positions may be compared with the positions of artifacts detected before. Then, for example, a detection of an artifact may not be considered to be valid if a positional deviation between the position of a current detected artifact and the positions of previous detected artifacts exceeds a certain threshold value.

In a preferred embodiment, motion associated with a current video frame is detected by comparing luminance values of the current video frame with luminance values of at least the previous video frame. Then, the process of detecting artifacts may be deactivated for the time in which no motion is detected. This is due to the fact that artifacts during an MPEG-decoding process occur especially in the case when motion is present within the video frame. Thus, the above-described step provides a very effective means to save computational resources. Preferably, the motion detecting process is done according to the following equation:

$$th = \left\| \left| \sum_{pix = 0}^{number\_of\_pixels - 1} Y(pix)_{current \atop frame} \right| - \left| \sum_{pix = 0}^{number\_of\_pixels - 1} Y(pix)_{prev. \atop frame} \right| \right\|$$

wherein number_of_pixels is the total number of pixels within a respective frame, pix is a pixel position index, and $Y(pix)$ is a luminance value of a pixel at a position indicated by pix. If the value th exceeds a certain motion threshold value, it is decided that motion is present.

As already indicated, the above-described method is in particular suitable to be used in conjunction with MPEG-video frames, but may also be applied to any other standard for compressing/decompressing digital video data, for example JPEG. The term "artifact pixel periodicy value" pv/ph is to be understood as the number of pixels after which the artifact occurs again. For example, if an artifact occurs every 8 pixels in a pixel line, pv is 8. pv and/or ph are preferably 8, if the above-described method is used in conjunction with MPEG-video frames.

In a preferred embodiment, the video frame is preprocessed such that borderlines of objects contained within the video frames are enhanced, wherein the preprocessing is done before applying said searching process for artifacts as described above.

The method as described above has the following advantages: The detection reliability is very high; the state of the art detects blocking artifact based on the analysis of only a single video frame at a time, which might lead to an unreliable detection especially when the video frame contains horizontal and vertical lines. The invention takes into consideration existence of motion between two succeeding video frames and uses a decision mechanism that provides information on the existence and deposition of the grids (the structure of all block border lines creates the grid).

The invention further provides an apparatus for detecting block-structured artifacts within a video frame, which comprises:

a) a vertical sum module for:

- calculating for each pixel line within the video frame pv vertical luminance levels $P_{i,l}$ according to following equation:

$$(1) \qquad P_{i,l} = \sum_{s = 0}^{(line\_length/pv) - 1} Y(pv \cdot s + i) \qquad,$$

wherein
pv is an artifact pixel periodicy value, i is an index running from 0 to (pv-1), 1 is a pixel line index running from 0 to (number_of_lines-1), wherein number_of_lines is the total number of pixel lines, $Y(x)$ is the luminance value of a pixel at a position x within a pixel line, and line_length is the total number of pixels of a single pixel line,

- calculating pv sums of the vertical luminance levels $PTV_i$ according to the following equation:

$$(2) \qquad PTV_i = \sum_{l = 0}^{number\_of\_lines - 1} P_{i,l} \qquad,$$

and/or

b) a horizontal sum module for:

- calculating for each pixel column within the video frame ph horizontal luminance levels $P_{i,c}$ according to following equation:

$$(3) \qquad P_{i,c} = \sum_{s=0}^{(column\_length/ph) - 1} Y(ph \cdot s + i) \qquad ,$$

wherein ph is an artifact pixel periodicy value, i is an index running from 0 to (ph-1), c is a pixel column index running from 0 to (number_of_columns-1), wherein number_of_columns is the total number of pixel columns, Y (x) is the luminance value of a pixel at a position x within a pixel column, and column_length is the total number of pixels of a single pixel column,

- calculating ph sums of the horizontal luminance levels $PTH_i$ according to the following equation:

$$(4) \qquad PTH_i = \sum_{c=0}^{number\_of\_columns - 1} P_{i,c} \qquad ,$$

and

c) a processing module being connected to the vertical sum module and the horizontal sum module for determining a highest value of the $PTV_i$ values and a highest value of the $PTH_i$ values, and for determining vertical and/or horizontal positions of the artifacts within the video frame on the basis of the highest $PTV_i$ value and/or the highest $PTH_i$ value.

Feature a) is needed if the vertical positions of said artifacts have to be determind, whereas feature b) is needed if the horizontal positions of said artifacts have to be determined, feature c) is always needed.

The apparatus described above in particular provides an "Automatic MPEG Structure Phase Detector" generating in real time reliable information on the existence and the positions of block artifacts occurring during an MPEG-decoding process.

In a preferred embodiment, the processing module comprises a first/second vertical peak detecting unit being connected to the vertical sum module for detecting the highest value/a second highest value of the $PTV_i$ values. Accordingly, the processing module may comprise a first/second horizontal peak detecting unit being connected to the horizontal sum module for detecting the highest value/a second highest value of the $PTH_i$ values.

The processing module may further comprise a decision unit being connected to the first/second vertical peak detecting unit and first/second horizontal peak detecting unit for processing the highest and/or second highest $PTV_i$/$PTH_i$ values supplied by the first/second vertical peak detecting unit and said first/second horizontal peak detecting unit in dependence of artifact information in order to decide if artifacts are present within the video frame.

In a preferred embodiment, the apparatus comprises a motion detection unit being connected to the decision unit to detect motion within the video frame currently processed by the vertical/horizontal sum modules, and to supply a motion detection result to the decision unit. The motion detection unit detects motion preferably according to the following equation:

$$th = \left\| \left| \sum_{pix=0}^{number\_of\_pixels - 1} Y(pix)_{\substack{current \\ frame}} \right| - \left| \sum_{pix=0}^{number\_of\_pixels - 1} Y(pix)_{\substack{prev. \\ frame}} \right| \right\|$$

wherein number_of_pixels is the total number of pixels within a respective frame, pix is a pixel position index, and Y (pix) is a luminance value of a pixel at a position indicated by pix. If the value th exceeds a certain motion threshold value, it is decided that motion is present.

It may be advantageous to use a preprocessing module being connected to the vertical/horizontal sum module and/or to the motion detection unit for enhancing borderlines of objects contained within the video frame before supplying a preprocessed video frame to the vertical/horizontal sum modules.

The apparatus may further comprise a storage means included within the decision unit for storing $PTV_i$/$PTH_i$ values and/or other artifact information. Thus, a history of artifacts occurred within previous video frames can be used to process the current video frame. The decision unit may further comprise a function for calculating a difference between the highest $PTV_i/PTH_i$ values and said second highest $PTV_i/PTH_i$ values, respectively, and for outputting a "positive" artifact detection result if the difference exceeds a certain threshold value. The decision unit may further comprise a function for dynamically setting the threshold value in depencence of existing artifact information.

The invention further provides a computer program product comprising computer program means adapted for performing the steps of the inventive method when it is executed on a computer, a digital signal processor or the like.

Further features, embodiments, and advantages will become more apparent in the following description which makes reference to the accompanying drawings, wherein:

**Fig. 1**   shows a preferred embodiment of the architecture of the appapratus according to the present invention;

**Fig. 2**   shows a schematic drawing of a video frame illustrating the principle of a vertical summing process according to the present invention.

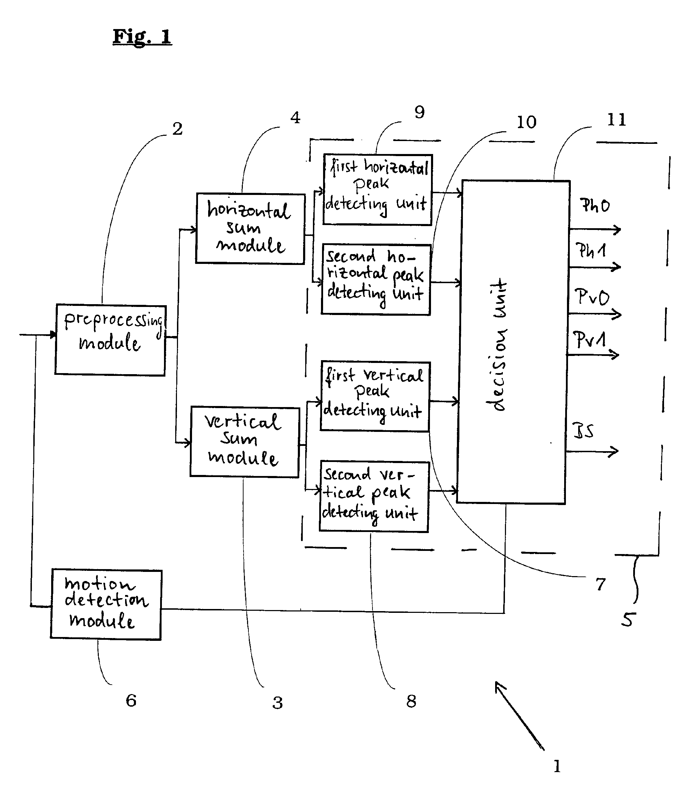

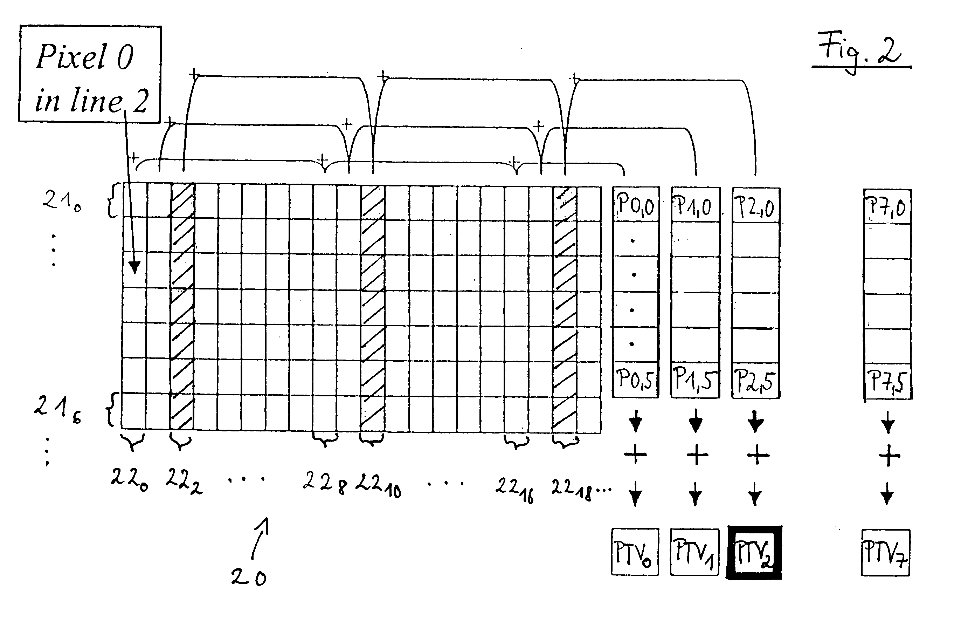

In the following, making reference to Figs. 1 and 2, a preferred embodiment of the method/apparatus according to the present invention will be described.

An apparatus for detecting block-structured artifacts 1 comprises a preprocessing module 2, a vertical sum module 3, a horizontal sum module 4, a processing module 5, and a motion detection module 6. The processing module 5 comprises a first vertical peak detecting unit 7, a second vertical peak detecting unit 8, a first horizontal peak detecting unit 9, a second horizontal peak detecting unit 10, and a decision unit 11. An output of the preprocessing module 2 is connected to both an input of the vertical sum module 3 and an input of the horizontal sum module 4. An output of the vertical sum module 3 is connected to both an input of the first vertical peak detecting unit 7, and an input of the second vertical peak detecting unit 8. An output of the horizontal sum module 4 is connected to both an input of the first horizontal peak detecting unit 9 and an input of the second horizontal peak detecting unit 10. Respective outputs of the first/second vertical peak detecting units 7, 8 and the first/second horizontal peak detecting units 9, 10 are connected with the decision unit 11. Further, an output of the motion detection module 6 is connected with the decision unit 11.

When artifacts of a video frame or a stream of video frames have to be detected, a video frame of the video frame stream is supplied to both the preprocessing module 2 and the motion detection module 6. In the preprocessing module 2, preferably a luminance part of a video field of the video frame is processed to enhance borderlines of graphical objects contained within the video frame including the artifacts (for example grid lines between blocks). An enhanced video frame is outputted by the preprocessing module 2 and supplied to both the input of the vertical sum module 3 and the horizontal sum module 4.

For sake of simplicity, in the further description only an algorithm performed within the vertical sum module 3 will be described in detail, since the process for the horizontal sum module 4 functions in an analogous manner.

In a first step, for each pixel line $21_0$ to $21_6$ of a video frame 20 pv vertical luminance levels $P_{i,l}$ are calculated according to the following equation:

$$(1) \qquad P_{1,\ell} = \sum_{s=0}^{(\text{line\_length/pv}) - 1} Y \, (\text{pv} \cdot s + i)$$

wherein pv is an artifact pixel periodicy value (here 8), i is an index running from zero to (pv-1), 1 is a pixel line index running from 0 to (number_of_lines-1), wherein number_of_lines is the total number of pixel lines $21_0$ to $21_6$ (here 7), Y(x) is the luminance value of a pixel at a position x within a pixel line, and line_length is the total number of pixels of a single pixel line. Thus, in this example, eight luminance levels $p_{0,0}$ to $p_{7,0}$ are for example calculated for the pixel line $21_0$. In this example, the artifact pattern is a pixel line which is repeated at every interval of 8 pixels, i.e. in the pixel column $22_2$, $22_{10}$ and $22_{18}$.

Then, pv (here: 8) sums of vertical luminance levels $PTV_i$ are calculated according to the following equation:

$$(2) \qquad PTV_i = \sum_{\ell=0}^{\text{number\_of\_lines} - 1} P_{1,\ell}$$

For example, the luminance values of the pixels of the pixel columns $22_2$, $22_{10}$ and $22_{18}$ are summed up to

yield the value $PTV_2$. Accordingly, the luminance values of all pixels of the pixel columns $22_0$, $22_8$ and $22_{16}$ are summed up to yield the value $PTV_0$.

The values $PTV_0$ to $PTV_7$ are supplied to both the first vertical peak detecting unit 7 and the second vertical peak detecting unit 8. The same is done in an analogous manner for the $PTH_i$ values which are supplied from the horizontal sum module 4 to both the first horizontal peak detecting unit 9 and the second horizontal peak detecting unit 10. In this example, in the first vertical peak detecting unit 7, it is determined that the highest among the $PTV_i$ values is the value $PTV_2$. Accordingly, in the second vertical peak detecting unit 8, it is determined that the second highest $PTV_i$ value is value $PTV_1$ (here it is assumed that $PTV_1$ is the second highest $PTV_i$ value).

Thus, the values $PTV_1$ and $PTV_2$ are supplied to the decision unit 11 where these two values are compared with each other. If the difference between these values exceeds a certain threshold value, it is decided that there is an artifact within the video frame 20. The positions of these artifacts are indicated by the highest $PTV_i$ value, i.e. here $PTV_2$ (the number of the "artifact column" is given by the index number of the highest $PTV_i$ value; here, the highest $PTV_i$ value is $PTV_2$, thus the "artifact column" is pixel column number 2). Since the artifact pixel periodicy value is 8 the artifact is repeated every 8 pixels. Thus, the positions of the artifacts are located in pixel columns $22_2$, $22_{10}$ and $22_{18}$. If the threshold value is not exceeded, it is determined that there is no artifact.

The threshold value may be dynamically set in dependence of previous generated/stored artifact information. This information may for example include previous phase information or a motion between two consecutive video frames. The threshold value may for example be increased if no artifacts have been detected before, and decreased if artifacts have been detected.

The motion detection module 6 detects motion of the current video frame supplied to its input by comparing luminance values of the current video frame with luminance values of at least the previous video frame. A respective motion detection result is supplied to the decision unit 11. The decision unit may deactivate the rest of the processing unit 5, i.e. the first/second peak detecting units 7 to 10 as well as the vertical sum module 3, the horizontal sum module 4, and the preprocessing module 2 until the motion detecting module 6 supplies a "positive" motion detection result telling the decision unit 11 that motion is again present within the current video frame of the video frame stream.

The motion detecting process is done by comparing an absolute value th of a difference given by equation:

$$\text{th} = \left\| \left| \sum_{\text{pix}=0}^{\text{number\_of\_pixels}-1} Y(\text{pix})_{\substack{\text{current} \\ \text{frame}}} \right| - \left| \sum_{\text{pix}=0}^{\text{number\_of\_pixels}-1} Y(\text{pix})_{\substack{\text{prev.} \\ \text{frame}}} \right| \right\|$$

with a certain motion threshold value, wherein number_of_pixels is the total number of pixels within a respective frame, pix is a pixel position index, and Y(pix) is a luminance value of a pixel at a position indicated by pix. If the value th exceeds said motion threshold value, it is decided that motion is present. In other words, an accumulated absolute value of all the pixels' luminance in the current video frame is substracted from an accumulated absolute value of all pixels' luminance in a previous video frame to obtain an absolute value th of a resulting difference, and this absolute value th is compared against said motion threshold value.

In this example, the decision unit 11 outputs four signals: Ph0 is the highest PTHi value, Ph1 is the second highest PTHi value, Pv0 is the highest PTVi value, Pv1 is the second highest PTVi value, and BS is a block signal indicating if artifacts are present or not.

It should to be mentioned that the reliability of detecting MPEG artifact blocks according to the inventive method is higher than those of the state of the art. Moreover, the inventive method can be applied both to one-dimensional and two-dimensional video frames.

**Claims**

1. Method for detecting block strucured artifacts within a video frame (20), comprising the following steps:

    a) calculating for each pixel line ($21_0$ to $21_6$) within said video frame (20) pv vertical luminance levels $P_{i,l}$ according to following equation:

$$(1) \qquad P_{i,\ell} = \sum_{s=0}^{(\text{line\_length}/pv) - 1} Y(pv \cdot s + i) \qquad,$$

wherein

pv is an artifact pixel periodicy value, i is an index running from 0 to pv-1, 1 is a pixel line index running from 0 to number_of_lines-1, wherein number_of_lines is the total number of pixel lines ($21_0$ to $21_6$), Y(x) is the luminance value of a pixel at a position x within a pixel line ($21_0$ to $21_6$), and line_length is the total number of pixels of a single pixel line ($21_0$ to $21_6$),

calculating pv sums of said vertical luminance levels PTV$_i$ according to the following equation:

$$(2) \qquad PTV_i = \sum_{\ell=0}^{\text{number\_of\_lines} - 1} P_{i,\ell} \qquad,$$

and/or

b) calculating for each pixel column ($22_0$ to $22_{19}$) within said video frame (20) ph horizontal luminance levels $P_{i,c}$ according to following equation:

$$(3) \qquad P_{i,c} = \sum_{s=0}^{(\text{column\_length}/ph) - 1} Y(ph \cdot s + i) \qquad,$$

wherein ph is an artifact pixel periodicy value, i is an index running from 0 to ph-1, c is a pixel column index running from 0 to number_of_columns-1, wherein number_of_columns is the total number of pixel columns ($22_0$ to $22_{19}$), Y(x) is the luminance value of a pixel at a position x within a pixel column ($22_0$ to $22_{19}$), and column_length is the total number of pixels of a single pixel column ($22_0$ to $22_{19}$).

calculating ph sums of said horizontal luminance levels PTH$_i$ according to the following equation:

$$(4) \qquad PTH_i = \sum_{c=0}^{\text{number\_of\_columns} - 1} P_{i,c} \qquad,$$

and

c) determining a highest value of said PTV$_i$ values and/or a highest value of said PTH$_i$ values, and determining vertical and/or horizontal positions of said artifacts within said video frame (20) on the basis of said highest PTV$_i$ value and/or said highest PTH$_i$ value.

2. Method according to claim 1, **characterized by** determining a second highest value of said PTV$_i$ values and a second highest value of said PTH$_i$ values, and determining that said highest value of said PTV$_i$ values and said highest value of said PTH$_i$ values respectively represent vertical and/or horizontal positions of said artifacts if a difference between said second highest value of said PTV$_i$ values and of said PTH$_i$ values respectively exceeds a certain threshold value.

3. Method according to claim 2, **characterized in that** said threshold value is dynamically set in dependence of previous generated block artifact information.

4. Method according to claim 3, **characterized by** increasing said threshold value if no artifacts have been detected, and decreasing said threshold value if artifacts have been detected.

5. Method according to anyone of the claims 1 to 4, **characterized by** detecting motion associated with a current video frame (20) by comparing luminance values of said current video frame (20) with luminance values of at least the previous video frame (20), and temporarily deactivating said process of detecting artifacts during the time in which no motion is detected.

6. Method according to claim 5, **characterized in that** said motion detecting process is done according to the following equation:

$$th = \left\| \left| \sum_{pix = 0}^{number\_of\_pixels - 1} Y(pix)_{current \atop frame} \right| - \left| \sum_{pix = 0}^{number\_of\_pixels - 1} Y(pix)_{prev. \atop frame} \right| \right\| ,$$

wherein number_of_pixels is the total number of pixels within a respective video frame (20), pix is a pixel position index, and Y(pix) is a luminance value of a pixel at a position indicated by pix, wherein, by the above formula, an accumulated absolute value of all the pixels' luminance in a current video frame is substracted from an accumulated absolute value of all pixels' luminance in a previous video frame to obtain an absolute value th of of a resulting difference, wherein said absolute value th is compared against a motion threshold value, and it is decided that motion is present if said absolute value th of said resulting difference is higher than said motion threshold value.

7. Method according to anyone of the claims 1 to 6, **characterized by** using said method to detect block strucured artifacts within MPEG video frames (20).

8. Method according to anyone of the claims 1 to 7, **characterized in that** said artifact pixel periodicy values pv and/or ph is 8.

9. Method according to anyone of the claims 1 to 8, **characterized by** preprocessing the video frame (20) such that borderlines of objects contained within the video frame (20) are enhanced, said preprocessing being done before searching for artifacts.

10. Apparatus (1) for detecting block structured artifacts within a video frame (20), comprising:

a) a vertical sum module (3) for:

- calculating for each pixel line ($21_0$ to $21_6$) within said video frame (20) pv vertical luminance levels $P_{i,l}$ according to following equation:

$$(1) \qquad P_{i,\ell} = \sum_{s = 0}^{(line\_length/pv) - 1} Y(pv \cdot s + i) ,$$

wherein
pv is an artifact pixel periodicy value, i is an index running from 0 to pv-1, 1 is a pixel line index running from 0 to number_of_lines-1, wherein number_of_lines is the total number of pixel lines ($21_0$ to $21_6$), Y(x) is the luminance value of a pixel at a position x within a pixel line ($21_0$ to $21_6$), and line_length is the total number of pixels of a single pixel line ($21_0$ to $21_6$),

- calculating pv sums of said vertical luminance levels $PTV_i$ according to the following equation:

$$(2) \qquad PTV_i = \sum_{\ell = 0}^{number\_of\_lines - 1} P_{i,\ell} \qquad ,$$

and/or

b) a horizontal sum module (4) for:

- calculating for each pixel column ($22_0$ to $22_{19}$) within said video frame (20) ph horizontal luminance levels $P_{i,c}$ according to following equation:

$$(3) \qquad P_{i,c} = \sum_{s = 0}^{(column\_length/ph) - 1} Y (ph \cdot s + i) \qquad ,$$

wherein ph is an artifact pixel periodicy value, i is an index running from 0 to ph-1, c is a pixel column index running from 0 to number_of_columns-1, wherein number_of_columns is the total number of pixel columns ($22_0$ to $22_{19}$), Y(x) is the luminance value of a pixel at a position x within a pixel column ($22_0$ to $22_{19}$), and column_length is the total number of pixels of a single pixel column ($22_0$ to $22_{19}$).

- calculating ph sums of said horizontal luminance levels $PTH_i$ according to the following equation:

$$(4) \qquad PTH_i = \sum_{c = 0}^{number\_of\_columns - 1} P_{i,c} \qquad ,$$

and

c) a processing module (5) being connected to said a vertical sum module (3) and said horizontal sum module (4) for determining a highest value of said $PTV_i$ values and a highest value of said $PTH_i$ values, and for determining vertical and/or horizontal positions of said artifacts within said video frame (20) on the basis of said highest $PTV_i$ value and/or said highest $PTH_i$ value.

11. Apparatus (1) according to claim 10, **characterized in that** said processing module (5) comprises a first/second vertical peak detecting unit (7, 8) being connected to said vertical sum module (4) for detecting said highest value/ a second highest value of said $PTV_i$ values.

12. Apparatus (1) according to anyone of the claims 10 to 11, **characterized in that** said processing module (5) comprises a first/second horizontal peak detecting unit (9, 10) being connected to said horizontal sum module (4) for detecting said highest value/a second highest value of said $PTH_i$ values.

13. Apparatus (1) according to claim 12, **characterized in that** said processing module (5) comprises a decision unit (11) being connected to said first/second vertical peak detecting unit (7, 8) and said first/second horizontal peak detecting unit (9, 10) for processing said highest and/or second highest $PTV_i/PTH_i$ values supplied by said first/ second vertical peak detecting unit (7, 8) and said first/second horizontal peak detecting unit (9, 10) in dependence of artifact correlated information in order to decide if artifacts are present within said video frame (20).

14. Apparatus (1) according to claim 13, **characterized by** a motion detection module (6) being connected to said decision unit (11) to detect motion within said video frame (20), and to supply a motion detection result to said decision unit (11).

**15.** Apparatus (1) according to anyone of the claims 10 to 14, **characterized by** a preprocessing module (2) being connected to said vertical/horizontal sum module (3, 4) for enhancing borderlines of objects contained within said video frame (20) before supplying a preprocessed video frame (20) to said vertical/horizontal sum modules (3, 4).

**16.** Apparatus (1) according to anyone of the claims 13 to 15, **characterized in that** said decision unit comprises a storage means for storing $PTV_i/PTH_i$ values and/or other artifact correlated information.

**17.** Apparatus (1) according to anyone of the claims 13 to 16, **characterized in that** said decision unit (11) comprises a function for calculating a difference between said highest $PTV_i/PTH_i$ value and said second highest $PTV_i/PTH_i$ value, respectively, and for outputting an artifact detection result if said difference exceeds a certain threshold value.

**18.** Apparatus (1) according to claim 17, **characterized in that** said decision unit (11) comprises a function for dynamically setting said threshold value in dependence of existing artifact correlated information.

**19.** Apparatus (1) according to claim 18, **characterized in that** said motion detection module (6) detects motion according to the following equation:

$$th = \left\| \left| \sum_{pix=0}^{number\_of\_pixels-1} Y(pix)_{\substack{current \\ frame}} \right| - \left| \sum_{pix=0}^{number\_of\_pixels-1} Y(pix)_{\substack{prev. \\ frame}} \right| \right\| ,$$

wherein number_of_pixels is the total number of pixels within a respective frame (20), pix is a pixel position Index, and Y(pix) is a luminance value of a pixel at a position indicated by pix, wherein, by the above formula, an accumulated absolute value of all the pixels' luminance in a current video frame is substracted from an accumulated absolute value of all pixels' luminance in a previous video frame to obtain an absolute value th of a resulting difference, wherein said absolute value th is compared against a motion threshold value, and it is decided that motion is present if said absolute value th of said resulting difference is higher than said motion threshold value.

**20.** Computer program product comprising computer program means adapted to perform any step of the method of the claims 1 to 9 when it is executed on a computer, a digital signal processor or the like.

## Fig. 1

Pixel 0
in line 2

$21_0$

$21_6$

$22_0$ $22_2$ $\cdots$ $22_8$ $22_{10}$ $\cdots$ $22_{16}$ $22_{18}\cdots$

20

$P0,0$  $P1,0$  $P2,0$  $P7,0$

$P0,5$  $P1,5$  $P2,5$  $P7,5$

$PTV_0$  $PTV_1$  $PTV_2$  $PTV_7$

Fig. 2

EP 1 326 450 A1

European Patent
Office

**EUROPEAN SEARCH REPORT**

Application Number

EP 01 13 0689

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 20912 A (KONINKL PHILIPS ELECTRONICS NV) 22 March 2001 (2001-03-22) <br> * page 2, lines 15-17; page 3, lines 12-15; page 8, lines 7-24 * | 1,10,20 | H04N7/30 |
| A | CHEN J-L ET AL: "An efficient algorithm for form structure extraction using strip projection" <br> PATTERN RECOGNITION, PERGAMON PRESS INC. ELMSFORD, N.Y, US, <br> vol. 31, no. 9, <br> 1 September 1998 (1998-09-01), pages 1353-1368, XP004127719 <br> ISSN: 0031-3203 <br> * abstract * | 1,10,20 | |
| A | TAN K T ET AL: "Measuring blocking artefacts using harmonic analysis" <br> ELECTRONICS LETTERS, IEE STEVENAGE, GB, <br> vol. 35, no. 16, <br> 5 August 1999 (1999-08-05), pages 1322-1323, XP006012504 <br> ISSN: 0013-5194 <br> * abstract * | 1,10,20 | TECHNICAL FIELDS SEARCHED (Int.Cl.7) <br><br> H04N |
| A | SUTHAHARAN S: "Lspl infin//-based distortion measure for blocking artifacts in digital video" <br> DEVICES, CIRCUITS AND SYSTEMS, 1998. PROCEEDINGS OF THE 1998 SECOND IEEE INTERNATIONAL CARACAS CONFERENCE ON ISLA DE MARGARITA, VENEZUELA 2-4 MARCH 1998, NEW YORK, NY, USA,IEEE, US, <br> 2 March 1998 (1998-03-02), pages 235-238, XP010295671 <br> ISBN: 0-7803-4434-0 <br> * the whole document * | 1,10,20 | |

-/--

The present search report has been drawn up for all claims

| Place of search | Date of completion of the search | Examiner |
|---|---|---|
| THE HAGUE | 28 June 2002 | With, F |

EPO FORM 1503 03.82 (P04C01)

EP 1 326 450 A1

**European Patent Office**

**EUROPEAN SEARCH REPORT**

Application Number

EP 01 13 0689

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DERVIAUX C ET AL: "Blocking artifact reduction of DCT coded image sequences using a visually adaptive postprocessing" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. 1, 16 September 1996 (1996-09-16), pages 5-8, XP010202580 ISBN: 0-7803-3259-8 * summary, page 6, left-hand column, last alinea, first sentence * | 1,10,20 | |
| A | EP 0 998 149 A (TELEDIFFUSION FSE ;FRANCE TELECOM (FR)) 3 May 2000 (2000-05-03) * abstract * | 1,10,20 | |
| A | FR 2 769 452 A (TELEDIFFUSION FSE) 9 April 1999 (1999-04-09) * summary; page 4, lines 4-21 * | 1,10,20 | |

TECHNICAL FIELDS SEARCHED (Int.Cl.7)

The present search report has been drawn up for all claims

| Place of search | Date of completion of the search | Examiner |
|---|---|---|
| THE HAGUE | 28 June 2002 | With, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**EP 1 326 450 A1**

**ANNEX TO THE EUROPEAN SEARCH REPORT
ON EUROPEAN PATENT APPLICATION NO.** EP 01 13 0689

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2002

| Patent document cited in search report | | Publication date | Patent family member(s) | | Publication date |
|---|---|---|---|---|---|
| WO 0120912 | A | 22-03-2001 | CN | 1321400 T | 07-11-2001 |
| | | | WO | 0120912 A1 | 22-03-2001 |
| | | | EP | 1129579 A1 | 05-09-2001 |
| EP 0998149 | A | 03-05-2000 | FR | 2785116 A1 | 28-04-2000 |
| | | | EP | 0998149 A1 | 03-05-2000 |
| FR 2769452 | A | 09-04-1999 | FR | 2769452 A1 | 09-04-1999 |
| | | | CA | 2306404 A1 | 15-04-1999 |
| | | | DE | 69804335 D1 | 25-04-2002 |
| | | | EP | 1020081 A1 | 19-07-2000 |
| | | | WO | 9918733 A1 | 15-04-1999 |
| | | | JP | 2001519630 T | 23-10-2001 |

EPO FORM P0459

For more details about this annex : see Official Journal of the European Patent Office, No. 12/82

16